# EUROPÄISCHE PATENTSCHRIFT

(11) **EP 1 794 543 B1**
(45) Veröffentlichungstag und Bekanntmachung des Hinweises auf die Patenterteilung: **04.11.2009**
(21) Anmeldenummer: 05802596.6
(22) Anmeldetag: 27.09.2005
(51) Int. Cl.: G01C 19/56

(54) **DREHRATENSENSOR**
ROTATION SPEED SENSOR
CAPTEUR DE VITESSE DE ROTATION

(30) Priorität: 27.09.2004 DE 102004047140
(43) Veröffentlichungstag der Anmeldung: 13.06.2007
(73) Patentinhaber: Conti Temic microelectronic GmbH, 90411 Nürnberg (DE)
(72) Erfinder: HARTMANN, Bernhard, 61169 Friedberg (DE); KAPSER, Konrad, 82166 Gräfelfing (DE); GOTTINGER, Reinhard, 85579 Neubiberg (DE); GÜNTHNER, Stefan, 60489 Frankfurt (DE)
(86) Internationale Anmeldenummer: PCT/DE2005/001773
(87) Internationale Veröffentlichungsnummer: WO 2006/034706

(56) Entgegenhaltungen:
- DE-A- 19 928 759
- DE-C1- 19 641 284
- US-A- 2004 035 204

## Beschreibung

Die vorliegende Erfindung betrifft einen Drehratensensor gemäß dem Oberbegriff von Anspruch 1.

Drehratensensoren werden üblicherweise verwendet, um eine Winkelgeschwindigkeit eines Gegenstandes um eine Achse zu ermitteln. Ist der Drehratensensor mikromechanisch auf Basis von Siliziumsubstrat hergestellt, bietet er gegenüber einem feinwerktechnischen Kreisel den Vorzug, dass er in sehr kleinen Abmessungen zu relativ niedrigen Kosten gefertigt werden kann. Vorteilhaft sind ferner eine relativ geringe Messunsicherheit und ein geringer Energieverbrauch während des Betriebes. Ein wichtiges Anwendungsgebiet von Drehratensensoren liegt in der Automobiltechnik, zum Beispiel bei Fahrdynamikregelungssystemen wie dem elektronischen Stabilitätsprogramm (ESP). Ein Antiblockiersystem, eine automatische Bremskraftverteilung, eine Antriebsschlupfregelung und eine Giermomentregelung wirken dabei so zusammen, dass eine Quer- und Längsstabilisierung des Fahrzeuges durch gezieltes Abbremsen einzelner Räder erreicht wird. Damit ist es möglich, ein Drehen des Fahrzeuges um seine Hochachse zu verhindern. Eine weitere Anwendung für Drehratensensoren liegt in der sogenannten Rollover-Detektion eines Fahrzeuges im Zusammenhang mit Airbagsteuereinheiten und Rückhaltesystemen für Fahrzeuginsassen. Ferner werden Drehratensensoren für Navigationszwecke sowie für die Bestimmung der Lage und des Bewegungszustandes von Fahrzeugen aller Art eingesetzt. Andere Einsatzfelder sind zum Beispiel Bildstabilisatoren für Videokameras, Dynamikregelung von Satelliten beim Aussetzen in die Erdumlaufbahn oder in der zivilen Luftfahrt bei Back-up Lageregelungssystemen.

Mikromechanisch hergestellte Drehratensensoren weisen allgemein eine Schwingeinrichtung auf, welche über einen Antrieb in eine Schwingung versetzt wird. Bewegt sich die Schwingeinrichtung in einem rotierenden System radial nach innen oder außen, ändert sich Ihre Bahngeschwindigkeit. Sie erfährt somit eine Tangentialbeschleunigung, welche durch die Coriolis-Kraft verursacht wird. Die Reaktion der Schwingeinrichtung auf die Rotation kann beispielsweise mittels einer weiteren Schwingeinrichtung oder anderen Ausleseeinrichtungen detektiert werden.

Aus der deutschen Patentschrift DE 196 41 284 C1 ist ein Drehratensensor bekannt, der eine als Federeinrichtung ausgebildete, entkoppelte Antriebs- und Auslesestruktur einer ersten und einer zweiten Schwingeinrichtung aufweist. Diese und ähnliche aus dem Stand der Technik bekannte Sensorkonfigurationen, welche auf dem Coriolis-Effekt beruhen, haben den Nachteil, dass durch die hier notwendige Entkopplung eine passive träge Masse erzeugt wird, welche wiederum die Messempfindlichkeit reduziert, da auf die passive Masse die Coriolis-Kraft nicht einwirken kann.

Die internationale Veröffentlichungsschrift WO 03/104823 A1 offenbart einen mehrachsigen monolithischen Beschleunigungssensor mit bis zu vier seismischen Massen, die in Form von Paddeln ausgebildet und über Torsionsfedern an einem Rahmen aufgehängt sind. Mit diesem Sensor können Beschleunigungen in Richtung der jeweiligen Hauptempfindlichkeitsachsen, jedoch keine Drehraten gemessen werden.

Aus der US 2004/0035204 A1 ist ein Drehratensensor mit den Merkmalen des Oberbegriffs von Patentanspruch 1 bekannt. Aufgrund der Anordnung der Basiselemente sind zur Aufhängung der seismischen Massen in den offenen Rahmen Torsions federn mit einer hohen Steifigkeit erforderlich. Dies führt zu einer relativ geringen Messempfindlichkeit eines derartigen Drehratensensors.

Der vorliegenden Erfindung liegt die Aufgabe zugrunde, die Empfindlichkeit des Drehratensensors auf einwirkende Coriolis-Kräfte zu maximieren. Insbesondere sollen dabei auch möglichst unabhängige Antriebs- und Auslesestrukturen geschaffen werden.

Diese Aufgabe wird erfindungsgemäß gelöst durch einen Drehratensensor mit den Merkmalen von Patentanspruch 1.

Somit werden sämtliche beweglichen Strukturen in Antriebsrichtung zum Schwingen angeregt, darunter auch die auf Coriolis-Kräfte empfindlichen Schwingeinrichtungen, welche jedoch noch einen weiteren Bewegungsfreiheitsgrad besitzen. Es gibt somit keine ruhenden bzw. passiven Massen mehr, die die Empfindlichkeit des Drehratensensors verringern, da die Coriolis-Kraft nicht auf ruhende- bzw. passive Massen einwirken kann.

Vorzugsweise ist dabei der Rahmen des Basiselementes im Wesentlichen nur in einer durch das Substrat aufgespannten Ebene beweglich ausgeführt. In der dazu senkrechten Richtung ist der Rahmen also im Wesentlichen starr. Die Schwingeinrichtung ist derart ausgebildet, dass sie vorzugsweise eine Bewegung senkrecht zur Antriebsbewegung ausführt. Die Antriebsbewegung kann durch Wahl von geeigneten Aufhängungen der Schwingeinrichtung weitestgehend Bewegungen entlang deren Freiheitsgrades nicht anregen. Ebenso kann die Schwingeinrichtung durch ihre Bewegungen die Antriebsbewegung nicht stören. Die sensierende Bewegung der Schwingeinrichtung ist mit anderen Worten von der Antriebsbewegung des Rahmens entkoppelt. Dies ist die bevorzugte Ausführungsform der vorliegenden Erfindung. Mit Vorteil ist insbesondere auch die Empfindlichkeitsrichtung der Ausleseeinrichtung im Wesentlichen senkrecht zur Wirkrichtung des Antriebsmittels.

Insbesondere weist jedes Basiselement ein separates Antriebsmittel auf, so dass jedes Basiselement unabhängig von anderen Basiselementen angetrieben bzw. zu Schwingungen angeregt werden kann.

Vorzugsweise ist das Antriebsmittel als Antriebskamm mit einer kapazitiven Anregung ausgebildet. Es ist aber auch möglich, dass die Anregung bzw. der Antrieb elektrisch, thermisch, magnetisch, piezoelektrisch oder auf andere Art und Weise erfolgt.

Die Schwingeinrichtung ist als seismische Masse, in Form eines Paddels, ausgebildet. Zur Aufhängung der Schwingeinrichtung am Rahmen und zur Aufhängung des Rahmens am Substrat sind vorzugsweise Federn vorgesehen. Die Aufhängung der Schwingeinrichtung erfolgt dabei bevorzugt über als Torsions- oder Biegebalken ausgebildete Federn.

Mit besonderem Vorteil sind die (Resonanz-)Frequenzen von Rahmen und Schwingeinrichtung durch die Federn unabhängig voneinander einstellbar, da die Federn voneinander unabhängig sind und sich im Wesentlichen nicht beeinflussen.

Der Drehratensensor weist zwei Basiselemente auf, die mittels einer Kopplungseinheit miteinander verbunden sind. Die Kopplung ist dabei bevorzugt so ausgeführt, dass sich die Basiselemente nur wenig in ihrer Bewegung beeinflussen. Die Basiselemente sind um 180° zueinander gedreht, so dass sie zu gegenphasigen Schwingungen angeregt werden können, wodurch der gesamte Schwerpunkt des Systems in Ruhe bleibt. Über die Kopplung können die Basiselemente dann eine gemeinsame Resonanzfrequenz aufweisen.

Mit besonderem Vorteil sind mindestens zwei Ausleseeinrichtungen vorhanden, so dass zwei Drehbewegungen in verschiedenen Richtungen sensiert bzw. detektiert werden können. Eine Ausleseeinrichtung erfasst dann bevorzugt Bewegungen des Rahmens in der durch das Substrat aufgespannten Ebene und senkrecht zur Wirkrichtung des Antriebsmittels und die andere Ausleseeinrichtung detektiert Bewegungen der Schwingeinrichtung senkrecht durch das Substrat aufgespannten Ebene.

In einer Variante der vorliegenden Erfindung können auch an jedem Rahmen bzw. Basiselement zwei Ausleseeinrichtungen um 180° zueinander gedreht vorgesehen sein.

In der nachfolgenden Beschreibung werden die Merkmale und Einzelheiten der Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:
- Fig. 1: in schematischer Ansicht erste Ausführungsbeispie- le der vorliegenden Erfindung mit jeweils einem Basiselement, das eine (Fig. 1a und 1b) bzw. zwei (Fig. 1c) Schwingeinrichtungen aufweist,
- Fig. 2: eine schematische Ansicht auf einen Teil eines er- findungsgemäßen Drehratensensors mit zwei gekop- pelten Basiselementen gemäß einem weiteren erfin- dungsgemäßen Ausbildungsbeispiel ,
- Fig. 3: schematisch ein drittes Ausführungsbeispiel der vorliegenden Erfindung mit zwei gekoppelten Basis- elementen und
- Fig. 4: eine schematische Ansicht einer kapazitiv wirken- den Ausleseeinrichtung.

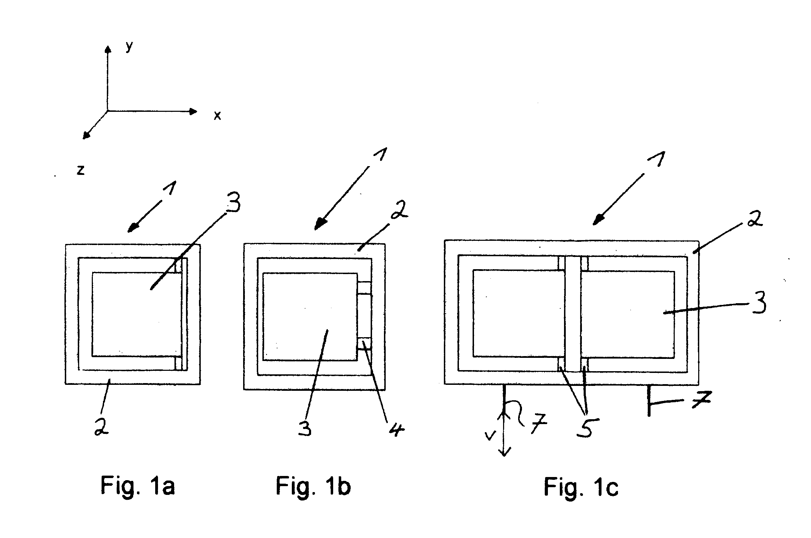

In Fig. 1, die ihrerseits drei einzelne Fig. 1a bis 1c beinhaltet, werden verschiedene Ausführungsformen von Basiselementen 1 gezeigt, die in der vorliegenden Erfindung Verwendung finden können. Ein mikromechanisch hergestellter Drehratensensor umfasst üblicherweise mehrere Komponenten. Ein in den Fig. nicht dargestelltes Substrat, bei dem es sich beispielsweise um einen Siliziumwafer handeln kann, weist insbesondere eine plane Oberfläche auf.

An oder in dem Substrat ist wenigstens ein Basiselement 1 ausgebildet, das eine oder mehrere Schwingeinrichtungen 3 umfasst. Gemäß der vorliegenden Erfindung sind die Schwingeinrichtungen als seismische Massen 3 ausgebildet, die in einem Rahmen 2 aufgehängt sind. Diese Aufhängung kann beispielsweise über Torsionsbalken 5 oder Biegebalken 4 realisiert werden. Biegebalken 4 haben eine lineare Federkennlinie, die seismischen Massen 3 der erfindungsgemäßen Drehratensensoren sind jedoch bevorzugt über Torsionsbalken 5 am Rahmen 2 befestigt. Gemäß Fig. 1c kann das Basiselement 1 eine oder mehrere seismische Massen 3 aufweisen, beispielsweise zwei Paddel 3 mit gegenüberliegender Aufhängung 5.

Die Aufhängung 4, 5 lässt eine Bewegung des Schwerpunktes der seismischen Masse 3 nur in z-Richtung senkrecht zur Ebene des Rahmens 2 zu. Die Ebene des Rahmens 2 ist parallel zum Substrat bzw. zur durch das Substrat aufgespannten Ebene (x/y-Ebene).

Wie in Fig. 1c dargestellt, ist das Basiselement 1 über eine oder mehrere, weitere Aufhängungen 7 am nicht gezeigten Substrat befestigt. Die Aufhängung 7 ist vorzugsweise durch Federn gebildet. Diese erlauben eine Bewegung des Basiselements 1 in Richtung y einer ersten Achse (y-Achse) parallel zum Substrat. In diesem Ausführungsbeispiel sind die Federn 7 im Wesentlichen steif in den Richtungen x, z senkrecht zur ersten Achse (y-Achse) ausgeführt. Gemäß später beschriebenen Ausführungsbeispielen ist es aber auch möglich, dass die Aufhängung 7 nur in einer Richtung z steif ist. Gemäß der bevorzugten Ausführungsform der vorliegenden Erfindung ist der Rahmen 2 des Basiselementes 1 auf jeden Fall nur in der durch das Substrat aufgespannten Ebene (x/y-Ebene) beweglich.

Der Drehratensensor weist weiterhin zumindest eine Anregung bzw. ein Antriebsmittel auf, das in Fig. 1a bis 1c nicht gezeigt ist. Das Antriebsmittel ist eine Vorrichtung, die das Basiselement 1 entlang der ersten Achse (y-Achse) zu Schwingungen anregen kann. Dies kann beispielsweise elektrisch, thermisch, magnetisch, piezoelektrisch oder auf andere, geeignete Art und Weise erfolgen.

Schließlich umfasst der Drehratensensor noch wenigstens eine Ausleseeinrichtung (in Fig. 1a bis 1c nicht gezeigt). Dabei handelt es sich um eine Vorrichtung, die eine Auslenkung der der Schwingeinrichtung bzw. der seismischen Masse 3 senkrecht zur Ebene (x/y-Ebene) des Rahmens 2 misst, also in Richtung z. Die Ausleseeinrichtung kann beispielsweise auf einem kapazitiven, piezoresistiven, magnetischen, piezoelektrischen oder optischen Messprinzip beruhen.

Das generelle Funktionsprinzip des Drehratensensors ist im Folgenden kurz beschrieben. Das Basiselement 1 bzw. der Rahmen 2 wird zu periodischen Schwingungen entlang der ersten Achse (y-Achse) angeregt. Bei einer Drehbewegung der Schwingeinrichtung bzw. der seismischen Masse 3 um die zweite Achse (x-Achse, in der Substratebene und senkrecht zur ersten Achse) tritt eine Coriolis-Kraft senkrecht zur ersten und zweiten Achse auf, nämlich in Richtung z der dritten Achse. Die Coriolis-Kraft wirkt sowohl auf den Rahmen 2 als auch auf die dort aufgehängte seismische Masse bzw. Schwingeinrichtung 3. Der Rahmen 2 ist in Richtung z jedoch steif, so dass nur die seismische Masse 3 entlang dieser Achse ausgelenkt wird. Diese Auslenkung wird mit der Detektions- bzw. Ausleseeinrichtung detektiert und ist ein Maß für die aufgetretene Drehgeschwindigkeit.

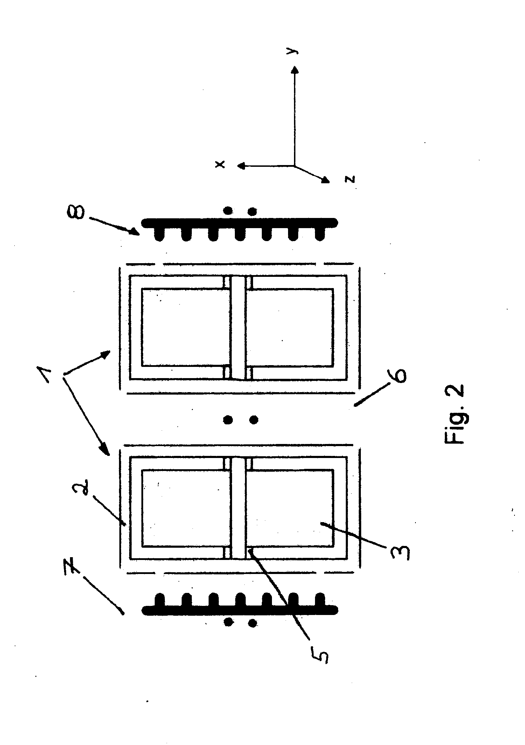

In Zusammenhang mit Fig. 2 und mit anderen Worten erläutert, wird ein weitgehend starrer Rahmen 2 in Richtung y des Antriebsmittels 8 angeregt und ist vorzugsweise nur in dieser Richtung y beweglich. Diese Bewegung wird auf die seismische Masse 3 übertragen, die nur in der Ausleserichtung z (senkrecht zur Anregungsrichtung y) weich aufgehängt ist. Dadurch bleibt die seismische Masse 3 weitestgehend während der reinen Antriebsbewegung in Ruhe. Die Coriolis-Kraft bewegt nur die seismische Masse 3, der bewegte Rahmen 2 ist weitgehend starr in dieser Richtung. Die Antriebsbewegung wird dadurch im Wesentlichen nicht gestört. Die Antriebsbewegung beeinflusst umgekehrt die Signalauslesung der Ausleseeinrichtung (in Fig. 2 nicht gezeigt) weitgehend nicht, die Auslesebewegung hat also im Prinzip keine Rückkopplung auf die Antriebsbewegung.

Die Anregung erfolgt vorzugsweise durch als Antriebsmittel 8 ausgebildete kapazitive Kammstrukturen (Fig. 2), sie könnte aber beispielsweise auch durch Piezowiderstände in der Aufhängung der seismischen Masse 3 erfolgen (nicht gezeigt), wobei dann der Stress in der Aufhängung 5 bei einer Auslenkung gemessen würde. Die Auslesung erfolgt beispielsweise kapazitiv durch Gegenelektroden, die in einem definierten Abstand zur seismischen Masse 3 angeordnet sind.

Das Antriebsmittel 8 wirkt direkt oder indirekt auf den Rahmen 2 des Basiselementes 1 ein bzw. wird über den Rahmen 2 das gesamte Basiselement 1 zum Schwingen angeregt. Somit werden sämtliche beweglichen Strukturen in Antriebsrichtung y zum Schwingen angeregt, darunter auch die auf Coriolis-Kräfte empfindlichen Schwingeinrichtungen 3, welche jedoch noch einen weiteren Bewegungsfreiheitsgrad besitzen. Es gibt somit keine ruhenden bzw. passiven Massen mehr, die die Empfindlichkeit des Drehratensensors verringern, da die Coriolis-Kraft nicht auf ruhende- bzw. passive Massen einwirken kann.

Fig. 2 zeigt ein Ausführungsbeispiel eines erfindungsgemäßen Drehratensensors mit zwei gekoppelten, um 180° gedrehten Basiselementen 1 mit je zwei seismischen Massen 3, die zu gegenphasigen Schwingungen angeregt werden. Dies hat folgenden Vorteil. Durch die gegenphasige Schwingung der beiden symmetrisch angeordneten Basiselemente 1 bleibt der gesamte Schwerpunkt des Systems in Ruhe, es wirkt idealerweise keine Energie auf den Chipaufbau. Lineare Beschleunigungen (beispielsweise Vibrationen) in Richtung der z-Achse können durch differentielle Signalauswertung eliminiert werden. Vibration in Richtung x haben aufgrund der hohen Steifigkeit der verwendeten Aufhängung keine Auswirkung auf den Betrieb des Drehratensensors. Eine Kopplungseinheit 6 zwischen den Basiselementen 1 erzwingt eine gemeinsame Resonanzfrequenz der beiden Basiselemente 1 für gegenphasige Bewegungungen in y-Richtung.

Insbesondere kann jedes Basiselement ein separates Antriebsmittel 8 aufweisen, so dass jedes Basiselement unabhängig von anderen Basiselementen angetrieben bzw. zu Schwingungen angeregt werden kann.

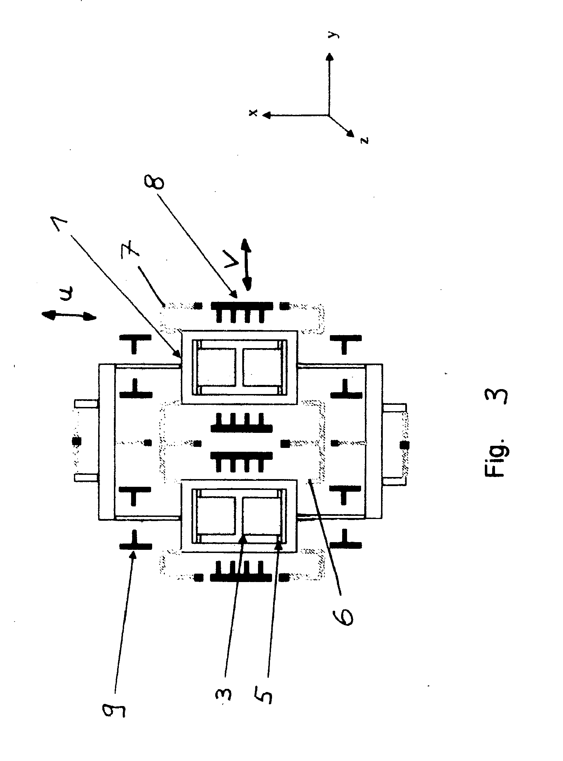

In Fig. 3 ist als weiteres Ausführungsbeispiel der vorliegenden Erfindung ein mehrachsiger x/z-Drehratensensor dargestellt. Basierend auf dem in Fig. 2 beschriebenen, einachsigen Drehratensensor kann durch dieses Ausführungsbeispiel ein zweiachsiger Drehratensensor mit den Empfindlichkeitsrichtungen x und z realisiert werden. Zwei Basiselemente 1 sind hier mit einem System von als Federn ausgebildeten Aufhängungen 7 derart aufgehängt, dass sie sowohl in Richtung y als auch in Richtung x beweglich sind. Die Basiselemente 1 werden entlang der Richtung y über als kapazitive Strukturen bzw. Antriebskämme ausgebildete Antriebsmittel 8 zu einer gegenphasigen Schwingung angeregt.

Der x-Sensor funktioniert folgendermaßen. Bei Auftreten einer Drehrate in Richtung x wird auf die im Basiselement 1 beweglich aufgehängten seismischen Massen bzw. Paddel 3 eine Kraft in Richtung z ausgeübt. Die dabei auftretende Verkippung um die Aufhängung bzw. den Torsionsbalken 5 wird mit einer in Fig. 3 nicht dargestellten Ausleseeinrichtung, die beispielsweise mittels darüber liegenden Elektroden ausgebildet sein kann, als Kapazitätsänderung detektiert.

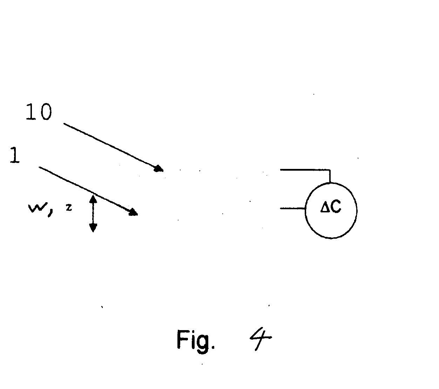

In Fig. 4 ist beispielsweise eine derartige Ausleseeinrichtung 10 dargestellt, welche die Bewegung der seismischen Masse 3 durch Kapazitätsänderungen Δ c erfassen kann. Dabei ist eine am Substrat fixierte Gegenelektrode vorhanden.

Wieder zurück zu Fig. 3, gemäß der der z-Sensor wie folgt arbeitet. Eine Drehrate in Richtung z bewirkt eine Verschiebung des Basiselements 1 in Richtung x. Diese Verschiebung wird mit einer als kapazitive Kammstrukturen ausgebildeten Ausleseeinrichtung 9 detektiert. Eine besonders vorteilhafte Anordnung ist gegeben, wenn an jedem Basiselement 1 zwei Ausleseeinrichtungen 9 um 180° gedreht befestigt sind. Somit kann bei jedem Basiselement 1 das Differenzsignal ausgewertet werden.

Der besondere Vorteil der erfindungsgemäßen Ausführungsform nach Fig. 3 liegt in Folgendem. Durch die gezeigte Anordnung kann gleichzeitig eine Drehrate in Richtung x und eine Drehrate in Richtung z gemessen werden. Die Ausleseeinrichtungen 9, 10 in diesen beiden Achsen sind weitgehend entkoppelt. Durch Anwendung differenzieller Ausleseprinzipien können Linearbeschleunigungen entlang der x-, bzw. der z-Achse weitgehend unterdrückt oder kompensiert werden. Die zweiachsige Ausführung des erfindungsgemäßen Drehratensensors ist auch relativ klein möglich, da für beide Detektionsachsen bzw. Empfindlichkeitsrichtungen u, w der Ausleseeinrichtungen 9, 10 dieselben Basiselemente 1 verwendet werden können.

Bei allen Ausführungsbeispielen können die Aufhängungen bzw. Federn 4, 5, 7, welche die Resonanzfrequenz der Anregungsbewegung des Rahmens 2 und der Auslesebewegung der seismischen Masse bzw. der Schwingeinrichtung 3 festlegen, weitgehend unabhängig voneinander ausgebildet sein. Mit besonderem Vorteil können somit auch die Frequenzen unabhängig voneinander eingestellt werden.

Bei den Ausführungsbeispielen können die Aufhängungen 4, 5, 7 der seismischen Massen 3 und der Rahmen 2 vorzugsweise auch so gewählt werden, dass eine geringe Kopplung der Bewegung der seismischen Masse bzw. Schwingeinrichtung 3 im ersten Basiselement 1 auf die Schwingeinrichtung 3 im zweiten Basiselement 1 vorhanden ist. Damit sind die Bewegungen der beiden seismischen Massen 3 nicht völlig unabhängig voneinander, so dass sich zwei gemeinsame Resonanzfrequenzen beider Basiselemente einstellen. In einer Nutzmode, welche durch einwirkende Coriolis-Kräfte angeregt wird, schwingen die seismischen Massen 3 der Basiselemente 1 um 180° phasenverschoben zu einander. Eine parasitäre Mode, welche die gleichphasige Schwingung (0° Phasenverschiebung) der seismischen Massen bzw. Schwingeinrichtungen 3 darstellt, liegt in einem anderen Frequenzband und kann durch geeignete Filterung eliminiert werden. Dadurch können Signale, hervorgerufen durch geringe Asymmetrien zwischen den derart gekoppelten Basiselementen 1, unterdrückt werden.

### Bezugszeichenliste

- 1: Basiselement
- 2: Rahmen
- 3: Schwingeinrichtung bzw. seismische Masse
- 4: Aufhängung bzw. Biegebalken
- 5: Aufhängung bzw. Torsionsbalken
- 6: Kopplungseinheit
- 7: Aufhängung des Rahmens am Substrat
- 8: Antriebsmittel
- 9: Ausleseeinrichtung
- 10: Ausleseeinrichtung

- Δc: Kapazitätsänderung
- u: Empfindlichkeitsrichtung einer Ausleseeinrichtung
- V: Wirkrichtung des Antriebsmittels
- w: Empfindlichkeitsrichtung einer Ausleseeinrichtung
- x: Richtung (Substratebene)
- y: Richtung (Substratebene)
- z: Richtung (senkrecht zur Substratebene)

## Patentansprüche

1. Drehratensensor mit einem Substrat, wenigstens einem Basiselement (1), das einen Rahmen (2), eine Aufhängung (7) des Rahmens (2) am Substrat, zumindest eine Schwingeinrichtung (3) und eine Aufhängung (4, 5) der Schwingeinrichtung (3) am Rahmen (2) umfasst, einem Antriebsmittel (8) und einer Ausleseeinrichtung (9, 10), wobei das Antriebsmittel (8) derart ausgebildet ist, dass es auf den Rahmen (2) des Basiselementes (1, 11, 12, 13, 14) einwirkt, wobei der Drehratensensor zwei Basiselemente (1) aufweist, die mittels einer Kopplungseinheit (6) miteinander verbunden sind, wobei die Basiselemente (1) um 180° zueinander gedreht und zu gegenphasigen Schwingungen anregbar sind und eine gemeinsame Resonanzfrequenz aufweisen, wobei die Schwingeinrichtung (3) als seismische Masse in Form eines Paddels ausgebildet ist, **dadurch gekennzeichnet, dass** die Drehachse des Paddels parallel zur Antriebsrichtung (y) ist.

2. Drehratensensor nach Anspruch 1, **dadurch gekennzeichnet, dass** der Rahmen (2) des Basiselementes (1) im Wesentlichen nur in einer durch das Substrat aufgespannten Ebene (x/y-Ebene) beweglich ist.

3. Drehratensensor nach einem der vorangehenden Ansprüche, **dadurch gekennzeichnet, dass** jedes Basiselement (1) ein separates Antriebsmittel (8) aufweist.

4. Drehratensensor nach einem der vorangehenden Ansprüche, **dadurch gekennzeichnet, dass** das Antriebsmittel (8) als Antriebskamm mit einer kapazitiven Anregung ausgebildet ist.

5. Drehratensensor nach einem der vorangehenden Ansprüche, **dadurch gekennzeichnet, dass** eine Empfindlichkeitsrichtung (u, w) der Ausleseeinrichtung (9, 10) im Wesentlichen senkrecht zur Wirkrichtung (v) des Antriebsmittels (8) ist.

6. Drehratensensor nach einem der vorangehenden Ansprüche, **dadurch gekennzeichnet, dass** die Aufhängung (4, 5) der Schwingeinrichtung (3) und die Aufhängung (7) des Rahmens (2) als Federn ausgebildet sind.

7. Drehratensensor nach Anspruch 6, **dadurch gekennzeichnet, dass** die Resonanzfrequenzen von Rahmen (2) und Schwingeinrichtung (3) durch die Federn (4, 5, 7) unabhängig voneinander einstellbar sind.

8. Drehratensensor nach Anspruch 1, **dadurch gekennzeichnet, dass** am Drehratensensor zumindest zwei Ausleseeinrichtungen (9, 10) vorgesehen sind.

9. Drehratensensor nach Anspruch 8, **dadurch gekennzeichnet, dass** eine Ausleseeinrichtung (9) Bewegungen (u) des Rahmens (2) in der durch das Substrat aufgespannten Ebene und senkrecht zur Wirkrichtung (v) des Antriebsmittels (8) und die andere Ausleseeinrichtung (10) Bewegungen (w) der Schwingeinrichtung (3) senkrecht zu der durch das Substrat aufgespannten Ebene detektiert.

10. Drehratensensor einem der Ansprüche 8 oder 9, **dadurch gekennzeichnet, dass** an jedem Rahmen (2) zwei Ausleseeinrichtungen (9) um 180° zueinander gedreht vorgesehen sind.

## Claims

1. Angular rate sensor having a substrate; at least one base element (1) comprising a frame (2), a suspension (7) of the frame (2) from the substrate, at least one oscillating device (3) and a suspension (4, 5) of the oscillating device (3) at the frame (2); a driving means (8); and a readout device (9, 10), wherein the driving means (8) is designed such that it acts upon the frame (2) of the base element (1, 11, 12, 13, 14), wherein the angular rate sensor has two base elements (1) that are connected to each other by means of a coupling unit (6), wherein the base elements (1) are rotated relative to each other by 180° and can be excited to perform oscillations in antiphase and have a common resonance frequency, wherein the oscillating device (3) is designed as a seismic mass in the form of a paddle, **characterized in that** the rotation axis of the paddle is parallel to the drive direction (y).

2. Angular rate sensor according to claim 1, **characterized in that** the frame (2) of the base element (1) is essentially only movable in a plane created by the substrate (x/y-plane).

3. Angular rate sensor according to any one of the preceding claims, **characterized in that** each base element (1) has a separate driving means (8).

4. Angular rate sensor according to any one of the preceding claims, **characterized in that** the driving means (8) is designed as a driving comb with a capacitive excitation.

5. Angular rate sensor according to any one of the preceding claims, **characterized in that** a direction of sensitivity (u, w) of the readout device (9, 10) is essentially perpendicular to the direction of action (v) of the driving means (8).

6. Angular rate sensor according to any one of the preceding claims, **characterized in that** the suspension (4, 5) of the oscillating device (3) and the suspension (7) of the frame (2) are designed as springs.

7. Angular rate sensor according to claim 6, **characterized in that** the resonance frequencies of the frame (2) and of the oscillating device (3) are adjustable independently of each other by the springs (4, 5, 7).

8. Angular rate sensor according to claim 1, **characterized in that** at least two readout devices (9, 10) are provided on the angular rate sensor.

9. Angular rate sensor according to claim 8, **characterized in that** one readout device (9) detects movements (u) of the frame (2) in the plane created by the substrate and perpendicular to the direction of action (v) of the driving means (8), and the other readout device (10) detects movements (w) of the oscillating device (3) perpendicular to the plane created by the substrate.

10. Angular rate sensor according to any one of claims 8 or 9, **characterized in that** on each frame (2) two readout devices (9) are provided that are rotated relative to each other by 180°.

## Revendications

1. Capteur gyroscopique avec un substrat, au moins un élément de base (1) qui comprend un cadre (2), une suspension (7) du cadre (2) sur le substrat, au moins un dispositif d'oscillation (3) et une suspension (4, 5) du dispositif d'oscillation (3) sur le cadre (2), avec un moyen d'entraînement (8) et un dispositif de lecture (9, 10), le moyen d'entraînement (8) étant constitué de sorte qu'il agit sur le cadre (2) de l'élément de base (1, 11, 12, 13, 14), le capteur gyroscopique présentant deux éléments de base (1) qui sont raccordés l'un à l'autre au moyen d'une unité de couplage (6), les éléments de base (1) étant tournés de 180° l'un par rapport à l'autre et pouvant être excités pour produire des oscillations de phase contraire et présentant une fréquence de résonance commune, le dispositif d'oscillation (3) étant constitué en tant que masse sismique sous forme de palette, **caractérisé en ce que** l'axe de rotation de la palette est parallèle à la direction d'entraînement (y).

2. Capteur gyroscopique selon la revendication 1, **caractérisé en ce que** le cadre (2) de l'élément de base (1) n'est essentiellement mobile que dans un plan (plan x/y) tendu à travers le substrat.

3. Capteur gyroscopique selon l'une des revendications précédentes, **caractérisé en ce que** chaque élément de base (1) présente un moyen d'entraînement (8) séparé.

4. Capteur gyroscopique selon l'une des revendications précédentes, **caractérisé en ce que** le moyen d'entraînement (8) est constitué en tant que came d'entraînement avec une excitation capacitive.

5. Capteur gyroscopique selon l'une des revendications précédentes, **caractérisé en ce qu'**une direction de sensibilité (u, w) du dispositif de lecture (9, 10) est essentiellement perpendiculaire à la direction d'action (v) du moyen d'entraînement (8).

6. Capteur gyroscopique selon l'une des revendications précédentes, **caractérisé en ce que** la suspension (4, 5) du dispositif d'oscillation (3) et la suspension (7) du cadre (2) sont constitués en tant que ressorts.

7. Capteur gyroscopique selon la revendication 6, **caractérisé en ce que** les fréquences de résonance du cadre (2) et du dispositif d'oscillation (3) peuvent être réglées indépendamment les unes des autres par les ressort (4, 5, 7) .

8. Capteur gyroscopique selon la revendication 1, **caractérisé en ce qu'**il est prévu au moins deux dispositifs de lecture (9, 10) sur le capteur gyroscopique.

9. Capteur gyroscopique selon la revendication 8, **caractérisé en ce qu'**un dispositif de lecture (9) détecte des mouvements (u) du cadre (2) dans le plan tendu à travers le substrat et perpendiculairement à la direction d'action (v) du moyen d'entraînement (8), et l'autre dispositif de lecture (10) détecte des mouvements (w) du dispositif d'oscillation (3) perpendiculairement au plan tendu à travers le substrat.

10. Capteur gyroscopique selon l'une des revendications 8 ou 9, **caractérisé en ce que**, sur chaque cadre (2), il est prévu deux dispositifs de lecture (9) tournés de 180° l'un par rapport à l'autre.
